Europäisches Patentamt

European Patent Office

Office européen des brevets

(11) Numéro de publication: **0 222 630**
**B1**

(12) **FASCICULE DE BREVET EUROPEEN**

(45) Date de publication du fascicule du brevet:
28.11.90

(21) Numéro de dépôt: 86402093.8

(22) Date de dépôt: 24.09.86

(51) Int. Cl.⁵: **H04L 5/14**

(54) **Dispositif de transmission simultanée de deux informations sur une même ligne électrique suivant des sens opposés.**

(30) Priorité: **30.10.85 FR 8516155**

(43) Date de publication de la demande:
**20.05.87 Bulletin 87/21**

(45) Mention de la délivrance du brevet:
**28.11.90 Bulletin 90/48**

(84) Etats contractants désignés:
**DE FR GB IT SE**

(56) Documents cités:
**EP-A- 0 051 529**
**GB-A- 2 130 457**
**US-A- 4 477 896**

(73) Titulaire: **Siemens Aktiengesellschaft,**
**Wittelsbacherplatz 2, D-8000 München 2(DE)**

(72) Inventeur: **Vernieres, François, 33, rue A. Delieux,**
**F-31400 Toulouse(FR)**
Inventeur: **Ramet, Serge, 7bis, rue Gabriel Péry,**
**F-38000 Grenoble(FR)**

ACTORUM AG

## Description

La présente invention concerne un dispositif de transmission simultanée de deux informations sur une même ligne électrique suivant des sens opposés.

La solution la plus couramment utilisée pour permettre à deux modules électroniques d'échanger entre eux des informations consiste à les réunir par deux lignes électriques. L'une des lignes sert à transmettre des informations dans un sens, l'autre à les transmettre dans le sens opposé. Naturellement, cette solution a pour inconvénient de nécessiter trois voire quatre connexions électriques et une longueur de ligne électrique au moins égale à deux fois la distance séparant les deux modules. Dans les applications où un grand nombre de modules électroniques doivent échanger entre eux des informations, le coût des lignes électriques et de leur câblage peut devenir prohibitif, tandis que la fiabilité de l'ensemble s'en trouve corrélativement dégradée. On rencontre notamment ce genre de problèmes à bord des véhicules automobiles qui, au cours des dernières années, ont vu leurs équipements électriques et électroniques croître considérablement.

Il est déjà connu d'apporter une réponse à ce problème en recourant au multiplexage. Cette technique permet en effet d'échanger dans les deux sens des informations entre deux modules électroniques au moyen d'une seule liaison. Dans le cas du multiplexage fréquentiel, au moins une des deux informations est transmise par modulation, puis démodulation d'une porteuse, tandis que dans celui du multiplexage temporel, l'échange d'informations n'est pas réellement simultané mais organisé par un protocole de prise de ligne. Cependant, il est tout aussi connu que le multiplexage est une technique complexe et coûteuse qui ne peut être adaptée directement à une architecture électronique existante et nécessite une définition entièrement nouvelle de celle-ci.

L'invention vise au contraire à fournir un procédé et un dispositif de transmission simultanée de deux informations sur une même ligne électrique suivant des sens opposés qui soient particulièrement simples et peu coûteux et qui puissent être utilisés en remplacement des liaisons classiques à deux lignes électriques sans remise en cause fondamentale de l'architecture des systèmes électriques ou électroniques concernés.

On connaît à cet effet, du document GB-A 2.130.437 un dispositif de transmission simultanée de deux informations sur une même ligne électrique suivant des sens opposés, ces informations étant représentées par la tension et le courant électriques respectivement présents sur la ligne, ce dispositif comprenant, à une première extrémité de la ligne, au moins une source de tension commandée et un récepteur de courant apte à détecter le courant circulant dans la ligne et, à la seconde extrémité de la ligne, au moins une source de courant commandée et un récepteur de tension apte à détecter la tension présente sur la ligne, les deux informations étant fournies au dispositif sous forme de signaux de tension. La source de tension commandée impose sur la ligne une tension fonction d'un premier signal de tension qui lui est appliqué en entrée et le récepteur de tension génère à partir de la tension détectée sur la ligne une tension de sortie image du premier signal de tension, tandis que la source de courant commandée impose dans la ligne la circulation d'un courant fonction d'un second signal de tension qui lui est appliqué en entrée et le récepteur de courant génère à partir du courant détecté dans la ligne une tension de sortie image du second signal de tension.

La présente invention propose une adaptation d'un dispositif de ce type à la transmission de signaux logiques. A cet effet la source de courant du dispositif selon l'invention comprend un transistor d'entrée et deux premiers transistors montés en miroir de courant pour imposer sélectivement dans la ligne une première et une seconde intensité de courant en réponse à l'application sur la base du transistor d'entrée d'un signal de tension représentatif de niveaux logiques "0 et "1" respectivement. Le récepteur de courant comprend deux transistors montés en miroir de courant et un transistor de sortie produisant une tension de sortie représentative de niveaux logiques en réponse à la détection des première et seconde intensités de courant par les seconds transistors.

D'autres caractéristiques et avantages de l'invention ressortiront de la description qui va suivre de différents modes de sa réalisation donnés uniquement à titre d'exemples, illustrés par les dessins annexés sur lesquels :

la figure 1 est un schéma électrique de principe illustrant l'invention,

la figure 2 est un schéma-bloc d'un premier mode de réalisation du dispositif suivant l'invention,

la figure 3 est un schéma-bloc d'un deuxième mode de réalisation du dispositif suivant l'invention,

les figures 4A et 4B sont des vues illustrant deux applications possibles du dispositif suivant l'invention ;

La figure 5 est un schéma électrique d'un premier exemple de réalisation du dispositif de la figure 3 ;

La figure 6 est un schéma électrique d'un deuxième exemple de réalisation du dispositif de la figure 3 ;

La figure 7 est un schéma électrique d'un troisième exemple de réalisation du dispositif de la figure 3 ;

La figure 8 est un schéma-bloc du dispositif suivant l'invention associé respectivement à un premier module électronique de génération d'étincelles d'allumage par bobine pour moteur à combustion interne et à un second module électronique d'élaboration du temps de conduction de la bobine ; et

La figure 9 est un chronogramme montrant certains des signaux générés dans le circuit représenté à la figure 8.

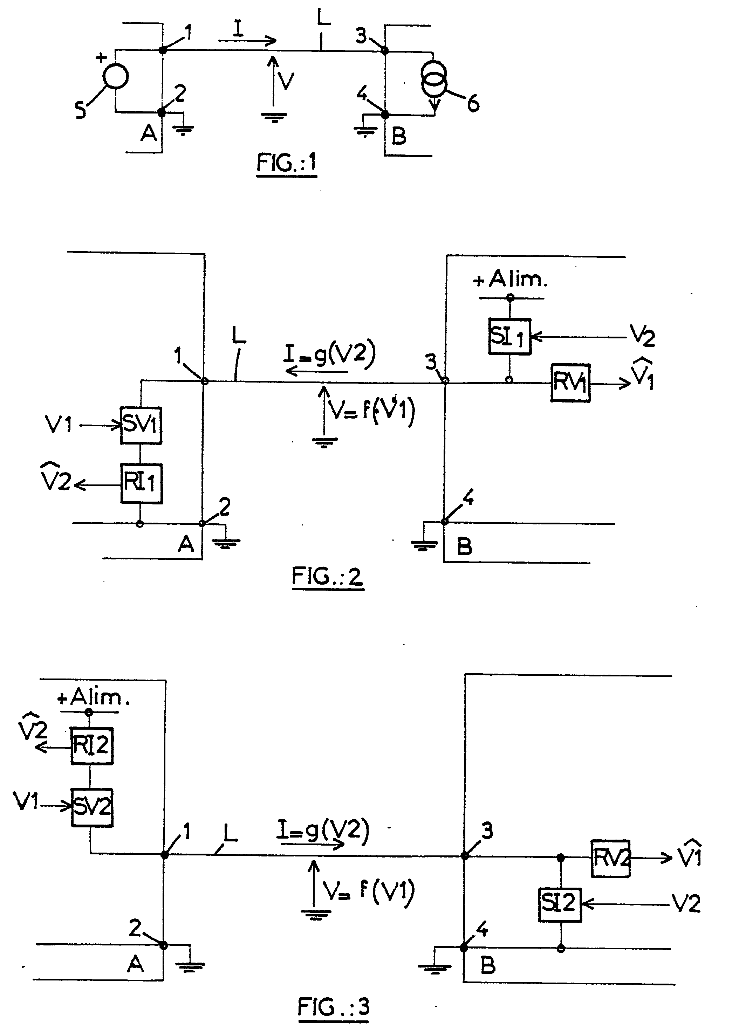

La figure 1 montre un module électronique A connecté à un module électronique B par une ligne électrique L. Dans la suite de la description on désignera par les références 1, 2 et 3, 4 les points de connexion des modules A et B à la ligne L et à la masse respectivement. A l'intérieur du module A une source de tension 5 développe une tension V entre les points 1 et 2, tandis qu'une source de courant 6 connectée entre les points 3 et 4 dans le module B fait circuler dans la ligne L un courant I.

Il résulte de ce schéma qu'une première information est transmise du module A vers le module B sous forme de la tension V appliquée entre les points 1 et 2 et que l'on retrouve entre les points 3 et 4. Une deuxième information est transmise simultanément par la ligne L du module B vers le module A sous la forme du courant I qui circule de A vers B. Les grandeurs V et I peuvent varier de façon continue (analogique) ou prendre des valeurs discrètes représentatives, par exemple, de niveaux logiques 0 et 1.

Dans les modes de réalisation représentés aux figures 2 et 3, le dispositif comporte quatre blocs fonctionnels, à savoir, d'une part, une source de tension SV et un récepteur de courant RI dans le module A et, d'autre part, une source de courant SI et un récepteur de tension RV dans le module B.

Dans la mode de réalisation de la figure 2, la source de tension SV1 et le récepteur de courant RI1 sont connectés en série entre la ligne L et la masse. Dans le module B, la source de courant SI1 est connectée en parallèle avec le récepteur de tension RV1 entre la ligne L et le potentiel d'une source d'alimentation (non représentée).

Dans le mode de réalisation de la figure 3, la source de tension SV2 et le récepteur de courant RI2 sont connectés en série entre la ligne L et le potentiel de la source d'alimentation et, dans l'autre module B, la source de courant SI2 est connectée en parallèle avec le récepteur de tension RV2 entre la ligne L et la masse.

Les modes de réalisation des figures 2 et 3 ont un fonctionnement identique à ceci près que le courant I dans la ligne L n'y circule pas dans le même sens : dans le cas de la figure 2, la source de courant SI1 impose la circulation d'un courant de même sens que l'information transmise de B vers A, alors que dans l'exemple de la figure 3 le courant I imposé par la source de courant SI2 circule dans le sens opposé à celui de l'information qu'il véhicule de B vers A.

Le bloc SV est une source de tension commandée qui fonctionne en séparateur tension-courant. Lorsqu'une tension de commande V1 lui est appliquée en entrée, ce bloc engendre entre les points 1 et 2 une tension $V = f(V1)$ indépendante du courant I qui le traverse.

Le bloc RV récepteur de tension a un courant d'entrée négligeable et produit une tension de sortie $\hat{V}1$ qui est fonction de la tension V appliquée par la source de tension SV entre les points 3 et 4. La tension de sortie $\hat{V}1$ est donc une image de la tension d'entrée V1.

Le bloc SI est une source de courant commandée qui, en réponse à l'application à son entrée d'une tension de commande V2, engendre un courant $I = g(V2)$ indépendant de la différence de potentiel présente aux bornes de ce bloc.

Enfin, le bloc RI est un récepteur de courant qui engendre une tension de sortie $\hat{V}2$ fonction de l'intensité du courant I qui le traverse. La tension de sortie $\hat{V}2$ est donc une image de la tension d'entrée V2.

Le fonctionnement du dispositif des figures 2 et 3 résulte de ce qui précède : quand une tension V1 est appliquée à la source de tension SV, celle-ci impose à la ligne L un potentiel $V = f(V1)$ par rapport à la masse. Le récepteur de tension RV détecte la tension V et produit une tension de sortie $\hat{V}1$ image de V1. L'information V1 est donc transmise du module A vers le module B sous forme de la tension V présente sur la ligne L. Simultanément, la source de courant SI impose dans la ligne L la circulation d'un courant I fonction de sa tension d'entrée V2. Le récepteur de courant détecte ce courant I et le convertit en une tension de sortie $\hat{V}2$ image de la tension d'entrée V2. Une information est donc transmise de B vers A sous la forme du courant I circulant dans la ligne L.

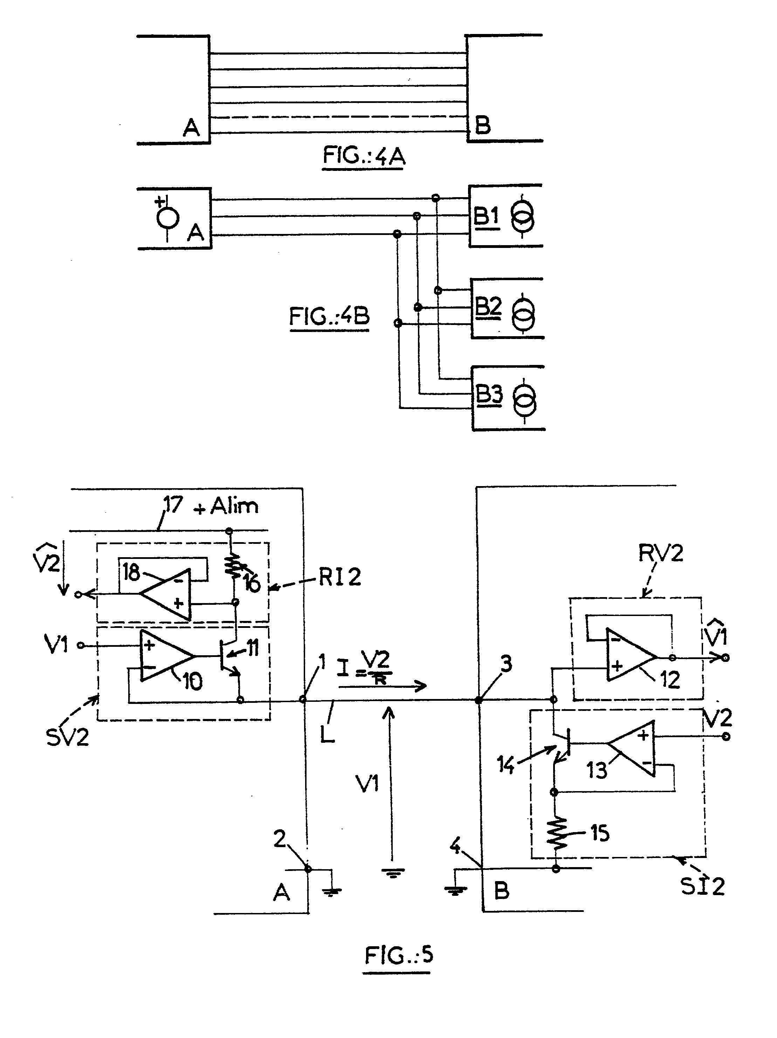

Le dispositif décrit ci-dessus peut recevoir de nombreuses applications dont deux exemples possibles ont été représentés sous forme schématique aux figures 4A et 4B.

La figure 4A illustre la possibilité de transmettre n bits parallèles en "full-duplex" à l'aide de n lignes électriques connectées entre deux modules électroniques A et B. La figure 4B illustre une application similaire dans laquelle un module maître A fonctionnant en source de tension est connecté par trois liaisons en parallèle à trois modules esclaves B1, B2 et B3 fonctionnant en sources de courant. Pour un nombre n de liaisons parallèles, le module maître A permet de sélectionner directement au plus $2^n$ modules esclaves.

Sur la figure 5 est donné un premier exemple de mise en oeuvre de l'invention conforme au mode de réalisation de la figure 3. La source de tension commandée SV2 comprend un amplificateur différentiel 10 dont la sortie attaque la base d'un transistor 11 dont le collecteur est connecté au récepteur de courant RI2 et dont l'émetteur est connecté à la ligne électrique L. L'amplificateur différentiel 10 est monté en suiveur de tension, la tension V1 représentative de l'information à transmettre au module B étant appliquée à son entrée positive tandis que son entrée négative est connectée avec l'émetteur du transistor 11 à la ligne L. Le récepteur de tension RV2 comprend également un amplificateur différentiel 12 monté en suiveur de tension : son entrée positive est connectée à la ligne L tandis que son entrée négative est connectée à sa sortie sur laquelle est présente la tension $\hat{V}1$.

La source de courant SI2 comprend un amplificateur différentiel 13 recevant à son entrée positive la tension V2 représentative de l'information à transmettre au module A. La sortie de l'amplificateur différentiel 13 attaque la base d'un transistor 14 dont le collecteur est relié directement à la ligne L et dont l'émetteur est relié à la masse par l'intermédiaire d'une résistance 15. L'entrée négative de l'amplificateur différentiel 13 est connectée entre la résistance 15 et l'émetteur du transistor 14. Le récepteur de courant RI2 comprend une résistance 16 connectée en série entre le conducteur d'alimentation 17 et le collecteur du transistor 11. Ce récepteur de courant comprend également un amplificateur différentiel 18 dont l'entrée négative est connectée à sa sortie et dont l'entrée positive est connectée entre la résistance 16 et le collecteur du transistor 11.

En fonctionnement, le signal de tension V1 appliqué à l'entrée de l'amplificateur différentiel 10 se retrouve sur l'émetteur du transistor 11 et, par conséquent, sur la ligne électrique L. Cette tension V1 appliquée à l'entrée positive de l'amplificateur différentiel 12 se retrouve donc à sa sortie. La tension de sortie V̂1 est donc égale à la tension V1 d'entrée aux décalages de tension près dus aux amplificateurs différentiels 10 et 12.

De leur côté, l'amplificateur différentiel 13 et le transistor 14 de la source de courant SI2 imposent aux bornes de la résistance 15 une tension V2. Cette source de courant SI2 impose donc la circulation dans la ligne L d'un courant I = V2/R, R étant la valeur de la résistance 15. La résistance 16 du récepteur de courant RI2 a la même valeur que la résistance 15 de sorte que l'on retrouve entre le potentiel de la source d'alimentation et la sortie de l'amplificateur différentiel 18 une tension V̂2 égale à la tension d'entrée V2 aux décalages de tension près dus aux amplificateurs différentiels 13 et 18.

L'exemple donné ci-dessus est adapté à une réalisation en technologie bipolaire pour échanger des informations analogiques ou numériques entre les modules A et B.

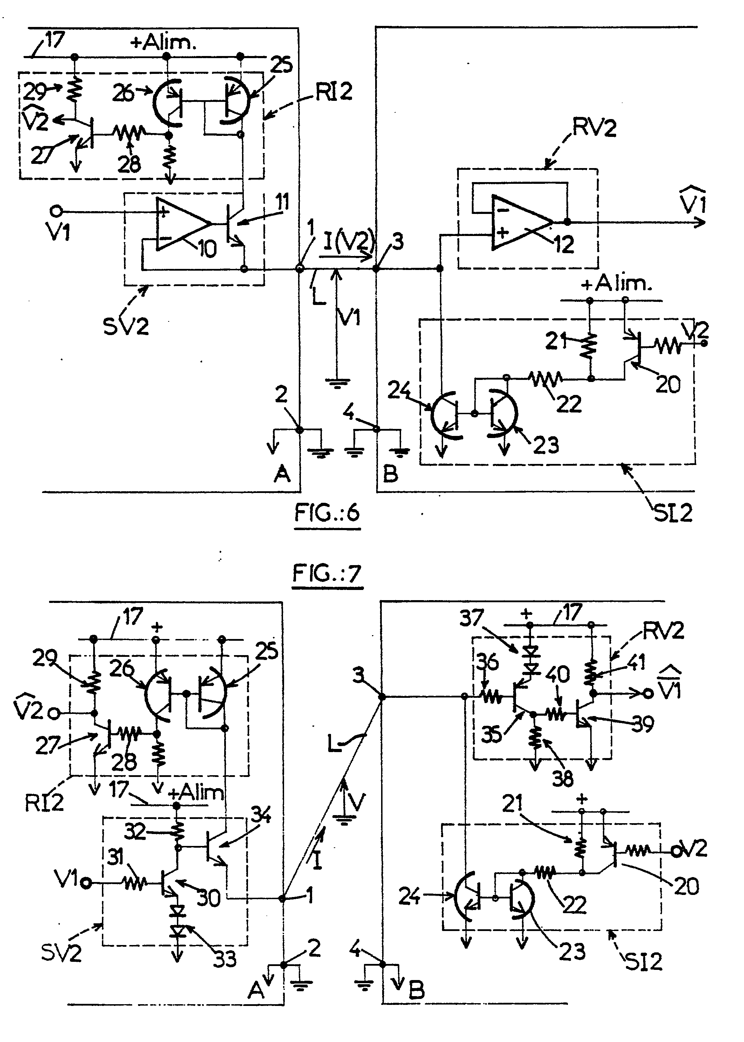

La figure 6 illustre un deuxième exemple de réalisation dans lequel la source de tension SV2 et le récepteur de tension RV2 sont inchangés alors que la source de courant SI2 et le récepteur de courant RI2 sont réalisés sous une forme simplifiée n'autorisant que la transmission d'informations numériques du module B vers le module A. Le signal de tension V2 appliqué à l'entrée de la source de courant SI2 peut donc prendre l'une ou l'autre de deux valeurs représentatives de niveaux logiques 0 ou 1. Ce signal attaque la base d'un transistor 20 qui fonctionne en commutation. L'émetteur du transistor 20 est connecté directement à la source d'alimentation. Son collecteur est connecté à une résistance 22. Une résistance 21 est connectée entre l'émetteur et le collecteur du transistor 20. La résistance 22 est connectée au collecteur et à la base d'un transistor 23 associé à un transistor 24 dont la base est connectée à celle du transistor 23. Les transistors 23 et 24 forment un miroir de courant, c'est-à-dire que le courant fixé dans le transistor 23 par la tension appliquée à la base du transistor 20 est recopié par le transistor 24. En d'autres termes, lorsque la tension V2 rend le transistor 20 conducteur, celui-ci court-circuite la résistance 21 et impose dans le transistor 23 un premier courant d'intensité I1 qui est recopié par le transistor 24 et circule donc dans la ligne L. Quand la tension V2 bloque le transistor 20, les résistances 21 et 22 se trouvent mises en série et le transistor 23 fixe un courant d'intensité différente I2 que le transistor 24 recopie et fait circuler dans la ligne L.

Le récepteur de courant RI2 comprend également deux transistors 25 et 26 montés en miroir de courant. L'émetteur du transistor 25 est connecté au conducteur de la source d'alimentation. Sa base et son collecteur sont connectés à la ligne L et à la base du transistor 26. Le transistor 26 recopie le courant qui circule dans le transistor 25 et son collecteur attaque la base d'un transistor 27 par l'intermédiaire d'une résistance 28. Suivant que le courant I1 ou I2 circule dans le transistor 26, le transistor 27 est bloqué ou conducteur, et l'on retrouve sur son collecteur, connecté au conducteur de la source d'alimentation par l'intermédiaire d'une résistance 29, une tension représentative d'un niveau logique 0 ou 1 correspondant à celui du signal de tension V2.

Sur la figure 7, la source de courant SI2 et le récepteur de courant RI2 sont réalisés de la même manière que leurs homologues de la figure 6 et les mêmes références numériques ont été conservées pour désigner les éléments correspondants. Dans ce troisième exemple, la forme particulière de réalisation de la source de tension SV2 et du récepteur de tension RV2 diffère de celle des figures 5 et 6 et ne permet que la transmission d'informations numériques du module A vers le module B. La source de tension SV2 comprend un transistor 30 dont la base est attaquée par le signal logique de tension V1 par l'intermédiaire d'une résistance 31. Le collecteur du transistor 30 est connecté au conducteur 17 de la source d'alimentation par l'intermédiaire d'une résistance 32 tandis que son émetteur est connecté à la masse par l'intermédiaire d'un ensemble de deux diodes 33 connectées en série. Un transistor 34 a sa base reliée au collecteur du transistor 30, son émetteur connecté à la ligne électrique L et son collecteur connecté au collecteur du transistor 25.

Le récepteur de tension RV2 comprend un transistor 35 à la base duquel la tension présente sur la ligne L est appliquée par l'intermédiaire d'une résistance 36. L'émetteur du transistor 35 est connecté au conducteur de potentiel de la source d'alimentation par l'intermédiaire d'un ensemble de deux diodes 37 connectées en série et son collecteur est relié à la masse à travers une résistance 38. Le collecteur du transistor 35 attaque la base d'un transistor 39 via une résistance 40. L'émetteur du transistor 39 est relié à la masse et son collecteur, sur lequel est présente la tension de sortie V̂1, est connecté au conducteur de potentiel 17 de la source d'alimentation par une résistance 41.

Suivant le niveau logique du signal de tension V1 appliqué à sa base, le transistor 30 est rendu conducteur ou bloqué. Le transistor 34 impose par conséquent sur la ligne L une tension de niveau haut ou de niveau bas qui est appliquée à la base du transistor 35 via la résistance 36. Suivant le niveau de tension appliqué à sa base, le transistor 35 bloque ou rend conducteur le transistor 39 sur le collecteur duquel on dispose d'une tension de sortie V̂1 représentative d'un niveau logique complémentaire de celui représenté par le signal de tension V1 appliqué au transistor 30.

Bien que les trois exemples spécifiques de réalisation donnés aux figures 5 à 7 soient adaptés à une réalisation en technologie bipolaire en circuits discrets ou en circuit intégré, il est bien entendu que les différents blocs du dispositif suivant l'invention peuvent être réalisés dans n'importe quelle autre technologie, par exemple en technologie MOS.

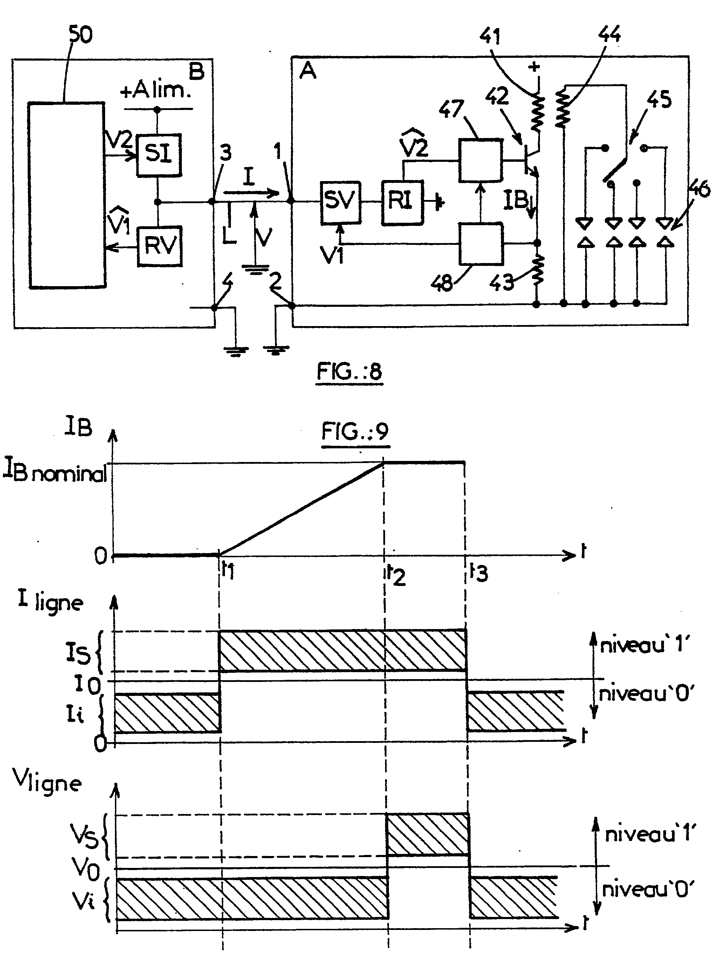

On a représenté à la figure 8 le dispositif de transmission suivant l'invention associé à un système électronique de commande de l'allumage d'un moteur à combustion interne.

Ce système comporte un module A de génération d'étincelles d'allumage par bobine et un module B d'élaboration du signal de mise en conduction de la bobine. Les fonctions essentielles remplies par les modules A et B sont déjà connues et l'on pourra se reporter à la demande de brevet européen EP-A-51 529 qui en donne une description détaillée.

Le module A comprend une bobine d'allumage dont le primaire 41 est connecté en série entre les deux pôles de la source d'alimentation par l'intermédiaire d'un commutateur électronique tel qu'un transistor 42 et d'une résistance 43. Le secondaire 44 de la bobine est connecté entre la masse et un allumeur 45 qui distribue la haute tension générée par le secondaire 44 de la bobine à une série de bougies d'allumage 46. Le commutateur 42 est piloté par un bloc 47 qui reçoit l'information de mise en conduction de la bobine délivrée par le module B et commande le passage ainsi que la régulation du courant dans la bobine. Cette régulation est assurée par l'intermédiaire d'un bloc 48 qui détecte le courant IB circulant dans le primaire 41 et qui, lorsque ce courant atteint une valeur nominale IB nominal, applique au bloc 47 un signal tel que celui-ci maintient ensuite le courant dans le primaire 41 à sa valeur nominale jusqu'à l'instant d'allumage.

Le module B comprend un bloc 50 d'élaboration du signal de mise en conduction de la bobine, qui peut être constitué par l'étage de sortie d'un calculateur d'allumage comme décrit dans la demande de brevet européen précitée. Ce bloc 50 détermine la durée optimale de condution de la bobine de manière à réduire au strict nécessaire la période de régulation comprise entre l'instant où le courant dans le primaire de la bobine a atteint sa valeur nominale et l'instant d'allumage. A cet effet, le bloc 50 reçoit, d'une part, des informations telles que la vitesse instantanée de rotation du moteur qui lui sont fournies par le calculateur d'allumage (non représenté) et, d'autre part, l'information relative au temps de régulation délivrée par le bloc 48 du module A. L'angle de conduction est donc calculé à chaque cycle en fonction de la vitesse de rotation du moteur, ainsi que des temps de conduction et de régulation mesurés au cycle précédent et dont la différence représente le temps strictement nécessaire à l'obtention de l'énergie nominale aux bornes de la bobine.

Dans le brevet européen précité, les informations relatives à la mise en conduction du primaire et au temps de régulation du courant sont échangées entre les modules A et B par l'intermédiaire de deux liaisons électriques distinctes. Dans l'exemple de la figure 8, ces deux informations sont transmises simultanément par la même ligne électrique L. A cet effet, le bloc 50 est en liaison avec le bloc 47 par l'intermédiaire d'une source de courant SI et d'un récepteur de courant RI qui sont reliés entre eux par la ligne électrique unique L. De même, le bloc 48 applique à une source de tension SV un signal de tension V1 représentatif de l'information relative au temps de régulation. Cette information transmise sous forme de tension sur la ligne L est détectée par le récepteur de tension RV dont la sortie applique au bloc 50 un signal de sortie V̂1 image du signal d'entrée V1.

Le fonctionnement du circuit de la figure 8 sera mieux compris en se reportant également au chronogramme de la figure 9. La source de courant SI est susceptible d'imposer dans la ligne L un courant qui peut prendre une valeur basse Ii inférieure à un seuil IO ou une valeur haute Is supérieure à ce seuil. De même, la source de tension SV peut imposer sur la ligne une tension qui peut prendre une valeur basse Vi inférieure à un seuil VO ou une valeur haute Vs supérieure à ce seuil.

Lorsqu'on se trouve en dehors de la période de conduction de la bobine, le bloc 50 applique à la source de courant SI un signal de tension V2 tel que la source fait circuler dans la ligne L un courant Ii inférieur au seuil IO. Ce courant est reconnu comme tel par le récepteur de courant RI qui applique au bloc 47 une tension V̂2 telle que le commutateur électronique 42 est bloqué. Par conséquent, aucun courant ne circule dans le primaire 41 et le bloc 48 applique à la source de tension SV une tension V1 telle que cette source applique à la ligne L une tension Vi inférieure au seuil VO. Cette tension est détectée par le récepteur de tension RV qui applique au bloc 50 un niveau logique V̂1 image du niveau V1 à l'entrée de la source. Lorsqu'au temps t1 le signal V2 change d'état pour commander la mise en conduction du primaire, la source SI impose la circulation d'un courant de valeur Is supérieure au seuil IO dans la ligne L. Ce changement d'état détecté par le récepteur de courant RI provoque la fermeture du commutateur électronique par le bloc 47 et la mise en conduction du primaire. Cependant, les signaux V1 et V̂1 ne changent pas d'état car le courant dans le primaire est encore inférieur à sa valeur nominale. Lorsque, à l'instant t2, ce courant devient égal à IB nominal, ceci est détecté par le bloc 48 qui transmet cette information au bloc 47 et à la source de tension SV. Cette dernière impose dès lors sur la ligne L un niveau de tension Vs supérieur au seuil VO. Ce niveau Vs est détecté par le récepteur de tension RV dont la sortie V̂1 prend un niveau logique image de celui appliqué à la source de tension. Simultanément, le bloc 47 commence à réguler le courant circulant dans le primaire 41 pour le limiter à la valeur IB nominal jusqu'à l'instant t3 de déclenchement de l'allumage où l'interrupteur 42 est à nouveau ouvert et la circulation du courant IB est interrompue. De ce fait, le courant et la tension imposés sur la ligne L repassent tous deux à un niveau bas Vi et Ii respectivement jusqu'au cycle suivant de conduction.

Si l'on considère que des niveaux hauts de la tension et du courant sur la ligne L correspondent à un niveau logique 1 et des niveaux bas de ces mêmes grandeurs à un niveau logique 0, on a donc une combinaison possible d'états logiques qui est la suivante :

avant t1 et après t3 : I = 0 et V = 0
entre t1 et t2 : I = 1 et V = 0
entre t2 et t3 : I = 1 et V = 1
l'état I = 0 et V = 1 étant impossible.

Cette dernière particularité autorise dans ce cas une réalisation simplifiée de la source de tension SV. En effet, il lui suffit de pouvoir générer une tension Vs supérieure au seuil Vo dans le seul cas où le courant circulant dans la ligne est supérieur au seuil Io.

Les performances du dispositif décrit dépendent :
- premièrement des constantes physiques caractéristiques de la ligne qui introduisent une certaine diaphonie liée à la fréquence de transmission de V et I. Ainsi pour une ligne de 1m de long présentant les caractéristiques suivantes : l = 1 micro-H/m et c = 100 pF/m, on pourra atteindre une diaphonie de 1% pour une fréquence de 159 kHz,
- deuxièmement du mode de réalisation des blocs SV, SI, RV et RI selon lequel un couplage supplémentaire plus ou moins important est introduit entre I et V.

## Revendications

1. Dispositif de transmission simultanée de deux informations sur une même ligne électrique suivant des sens opposés, ces informations étant représentées respectivement par la tension (V) et le courant (I) transmis sur la ligne dans la bande de fréquence de base, ce dispositif comprenant, à une première extrémité (1) de la ligne, au moins une source de tension commandée (SV1, SV2) et un récepteur de courant (RI2) apte à détecter le courant (I) circulant dans la ligne (L) et, à la deuxième extrémité (3) de la ligne, au moins une source de courant commandée (SI2) et un récepteur de tension (RV2) apte à détecter la tension (V) présente sur la ligne, la source de tension commandée (SV2) imposant sur la ligne une tension (V) fonction d'un premier signal de tension (V1) qui lui est appliqué en entrée et le récepteur de tension (RV2) engendrant à partir de la tension détectée (V) sur la ligne (L) une tension de sortie (V̂1) image du premier signal de tension, la source de courant commandée (SI2) imposant dans la ligne la circulation d'un courant (I) fonction d'un second signal de tension (V2) qui lui est appliqué en entrée et le récepteur de courant (RI2) engendrant à partir du courant (I) détecté dans la ligne (L) une tension de sortie (V̂2) image du second signal de tension (V2), le second signal de tension (V2) étant susceptible de prendre deux valeurs représentatives de niveaux logiques "0" et "1", dispositif caractérisé en ce que la source de courant (SI2) comprend un transistor d'entrée (20) et deux transistors (23, 24) montés en miroir de courant pour imposer sélectivement dans la ligne (L) une première et une seconde intensité de courant en réponse à l'application sur la base du transistor d'entrée (20) d'un signal de tension (V2) représentatif de niveaux logiques "0" et "1" respectivement, et en ce que le récepteur de courant (RI2) comprend deux transistors (25, 26) montés en miroir de courant et un transistor de sortie (27) produisant une tension de sortie (V̂2)

représentative de niveaux logiques en réponse à la détection des première et seconde intensités de courant par les seconds transistors (25, 26).

2. Dispositif conforme à la revendication 1, dans lequel le premier signal de tension (V1) est susceptible de prendre deux valeurs représentatives de niveaux logiques "0" et "1", caractérisé en ce que la source de tension (SV2) comprend un montage à transistors (30, 34) adapté pour imposer sélectivement sur la ligne (L) un premier et un second niveau de tension en réponse à l'application à son entrée d'un signal de tension (V1) représentatif de niveaux logiques "0" et "1" respectivement, et le récepteur de tension (RV2) comprend un montage à transistors (35, 39) adapté pour convertir lesdits niveaux de tension de la ligne en une tension de sortie (V̂1) représentative de niveaux logiques.

3. Dispositif suivant l'une quelconque des revendications 1 et 2, caractérisé en ce que la source de tension (SV) et le récepteur de courant (RI) sont associés à un premier module électronique (A) de génération d'étincelles d'allumage par moteur à combustion interne et la source de courant (SI) et le récepteur de tension (RV) sont associés à un deuxième module électronique (B) d'élaboration du signal de mise en conduction de la bobine (40), en ce que le premier module (A) comprend des moyens (47) de commande de conduction de la bobine et de régulation du courant dans celle-ci ainsi que des moyens (48) de détection du courant (IB) dans la bobine (40), tandis que le deuxième module (B) comprend des moyens (50) de calcul du temps de conduction de la bobine en fonction du temps de conduction et du temps de régulation mesurés au cycle de conduction précédent, et en ce que la source de tension (SV) est connectée aux moyens de détection (48) pour transmettre au deuxième module, par l'intermédiaire du récepteur de tension (RV), l'information relative au temps de régulation sous forme d'une tension appliquée à ladite ligne (L) et la source de courant (SI) est connectée au deuxième module (B) pour transmettre au premier module, par l'intermédiaire du récepteur de courant (SI), l'information relative au temps de conduction calculé sous forme d'un courant circulant dans ladite ligne (L).

## Claims

1. Device for simultaneous transmission of two data signals over the same electrical line in opposite directions, these data signals being represented by the voltage (V) and current (I), respectively, transmitted on the line within the basic frequency band, this device compromising, at a first end (1) of said line, at least one controlled voltage source (SV1, SV2) and a current receiver (RI2) capable of detecting the current (I) flowing in said line (L) and, at the second end (3) of said line, at least one controlled current source (SI2) and a voltage receiver (RV2) capable of detecting the voltage (V) present on said line, said controlled voltage source (SV2) imposing on said line a voltage (V) depending on a first voltage signal (V1) which is applied to it as an input and said voltage receiver (RV2) generating from the voltage (V) detected on said line (L) an output voltage (V̂1) which is an image of said first voltage signal, said controlled current source (SI2) imposing in said line the flow of a current (I) depending on a second voltage signal (V) which is applied to it as an input and said current receiver (RI2) generating from the current (I) detected in said line (L) an output voltage (V2) which is an image of said second voltage signal (V̂2), said second voltage signal (V2) being capable of having two values representing logic levels "0" and "1", which device is characterized in that said current source (SI2) comprises an input transistor (20) and two transistors (23, 24) connected as a current mirror in order to selectively impose in said line (L) a first and a second current intensity in response to the application on the base of said input transistor (20) of a voltage signal (V2) representing logic levels "0" and "1"respectively, and in that said current receiver (RI2) comprises two transistors (25, 26) connected as a current mirror and an output transistor (27) producing an output voltage (V̂2) representing logic levels in response to the detection of the first and second current intensities by said second transistors (25, 26).

2. Device according to Claim 1 in which said first voltage signal (V1) is capable of having two values representing logic levels "0" and "1", characterized in that said voltage source (SV2) comprises a configuration of transistors (30, 34) adapted to selectively impose on said line (L) a first and a second voltage level in response to the application to its input of a voltage signal (V1) representing logic levels "0" and "1" respectively, and said voltage receiver (RV2) comprises a configuration of transistors (35, 39) adapted to convert the said voltage levels on said line into an output voltage (V̂1) representing logic levels V.

3. Device according to either of Claims 1 and 2, characterized in that said voltage source (SV) and said current receiver (RI) are connected to a first electronic module (A) for the generation of coil ignition sparks for an internal combustion engine and said current source (SI) and said voltage receiver (RV) are associated with a second electronic module (B) for the production of the signal for starting conduction in the coil (40), and in that said first module (A) comprises means (47) of controlling the conduction of the coil and of regulating the current in the coil as well as means (48) of detecting the current (IB) in said coil (40), while said second module (B) comprises means (50) of computing the conduction time of said coil depending on the conduction time and on the regulation time measured during the previous conduction cycle, and in that said voltage source (SV) is connected to said means of detection (48) in order to transmit to said second module, via said voltage receiver (RV), data signals relating to said regulation time in the form of a voltage applied to the said line (L) and said current source (SI) is connected to said second module (B) in order to transmit to said first module, via said current receiver (SI), data signals relating to said calculated conduction time in the form of a current flowing in the said line (L).

Patentansprüche

1. Einrichtung zum gleichzeitigen Übertragen von zwei Informationen über dieselbe elektrische Leitung in entgegengesetzten Richtungen, wobei die Informationen aus der Spannung (V) und dem Strom (I) an bzw. in der Leitung in einem Grundfrequenzband bestehen und die Einrichtung aufweist: an einem ersten Ende (1) der Leitung mindestens eine gesteuerte Spannungsquelle (SV1, SV2) und einen Stromempfänger (RI2) zum Messen des in der Leitung (L) fließenden Stroms (I) und am zweiten Ende (3) der Leitung mindestens eine gesteuerte Stromquelle (SI2) und einen Spannungsempfänger (RV2) zum Messen der an der Leitung anstehenden Spannung (V), wobei die gesteuerte Spannungsquelle (SV2) auf der Leitung eine Spannung (V) abhängig von einem ersten am Eingang anstehenden Spannungssignal (V1) erzeugt und der Spannungsempfänger (RV2) im wesentlichen entsprechend der auf der Leitung (L) festgestellten Spannung (V) eine Ausgangsspannung (V̂1) als Abbild des ersten Spannungssignals erzeugt, wobei die gesteuerte Stromquelle (SI2) auf der Leitung einen Strom (I) abhängig von einem zweiten an den Eingang angelegten Spannungssignal (V2) hervorruft und der Stromempfänger (RI2) im wesentlichen entsprechend der in der Leitung (L) fließenden Strom (I) eine Ausgangsspannung (V̂2) als Abbild des zweiten Spannungssignals (V2) erzeugt, wobei das zweite Spannungssignal (V2) wahlweise zwei den logischen Signalpegeln "0" und "1" entsprechende Werte annimmt, dadurch gekennzeichnet, daß die Stromquelle (SI2) einen Eingangstransistor (20) und zwei bezüglich des Stroms spiegelbildlich angeordnete Transistoren (23, 24) aufweist, um in der Leitung (L) wahlweise eine erste und eine zweite Stromstärke hervorzurufen, die davon abhängig ist, ob an der Basis des Eingangstransistors (20) ein Spannungssignal (V2) entsprechend dem logischen Wert "0" oder "1" anlegt, und daß der Stromempfänger (RI2) zwei bezüglich des Stroms spiegelbildlich angeordnete Transistoren (25, 26) und einen Ausgangstransistor (27) aufweist, der eine Ausgangsspannung (V̂2) von entsprechenden logischen Pegeln abhängig davon erzeugt, ob die zweiten Transistoren (25, 26) die erste oder zweite Stromstärke empfangen.

2. Einrichtung nach Anspruch 1, wobei das erste Spannungssignal (V1) wahlweise zwei Werte entsprechend den logischen Pegeln "0" und "1" annehmen kann, dadurch gekennzeichnet, daß die Spannungsquelle (SV2) eine Transistoranordnung (30, 34) aufweist, mit der wahlweise auf der Leitung (L) ein erster und ein zweiter Spannungspegel abhängig von einem am Eingang anstehenden Spannungssignal (V1) mit dem logischen Pegel "0" oder "1" eine Transistoranordnung (35, 39) aufweist, mit der die Spannungspegel auf der Leitung in eine den logischen Pegeln entsprechende Ausgangsspannung (V̂1) transformierbar ist.

3. Einrichtung nach Anspruch 1 oder 2, dadurch gekennzeichnet, daß die Spannungsquelle (SV) und der Stromempfänger (RI) mit einem ersten elektronischen Modul (A) zum Erzeugen von Zündfunken in einer Spule für eine Brennkraftmaschine verbunden sind und die Stromquelle (SI) und der Spannungsempfänger (RV) mit einem zweiten elektronischen Modul (B) zum Bereitstellen des die Zündspule (40) aktivierenden Signals verbunden sind, und daß das erste Modul (A) Mittel (47) zum Steuern der Stromführung der Zündspule sowie Mittel (48) zum Messen des Stromes (IB) in der Zündspule (40) aufweist, daß das zweite Modul (B) Mittel (50) zum Berechnen der Stromführungszeiten der Zündspule abhängig von in vorausgehenden Zyklen der Stromführungszeiten aufweist und daß die Spannungsquelle (SV) an die Meßeinrichtung (48) angeschlossen ist, um über den Spannungsempfänger (RV) die die Steuerzeiten betreffenden Informationen in Form einer Spannung an der Leitung (L) an das zweite Modul zu übertragen und daß die Stromquelle (SI) mit dem zweiten Modul (B) verbunden ist, um an das erste Modul (A) über den Stromempfänger (SI) die die Stromführungszeiten betreffenden und berechneten Informationen in Form eines Stromes in der Leitung (L) zu übertragen.

EP 0 222 630 B1

FIG.:1

FIG.:2

FIG.:3

FIG.:4A

FIG.:4B

FIG.:5

FIG.:6

FIG.:7

EP 0 222 630 B1

FIG.:8

FIG.:9